# EUROPÄISCHE PATENTSCHRIFT

(11) **EP 1 992 215 B1**
(45) Veröffentlichungstag und Bekanntmachung des Hinweises auf die Patenterteilung: **09.12.2009**
(21) Anmeldenummer: 07009723.3
(22) Anmeldetag: 15.05.2007
(51) Int. Cl.: A01D 78/10, A01B 73/06

(54) **Landmaschine**
Agricultural machine
Machine agricole

(43) Veröffentlichungstag der Anmeldung: 19.11.2008
(73) Patentinhaber: FELLA-Werke GmbH, 90533 Feucht (DE)
(72) Erfinder: Kohl, Bernhard, 90537 Feucht (DE); Angleitner, Klaus, 91094 Langensendelbach - Bräuningshof (DE)
(74) Vertreter: Grünecker, Kinkeldey, Stockmair & Schwanhäusser Anwaltssozietät

(56) Entgegenhaltungen:
- EP-A- 0 224 667
- EP-A- 0 947 129
- EP-A1- 0 956 759
- EP-A1- 1 493 324
- DE-U1- 20 012 446

## Beschreibung

Die Erfindung betrifft eine Landmaschine gemäß Oberbegriff des Patentanspruchs 1.

Bei der Heuwerbungsmaschine gemäß EP-A-1 493 324 ist die hydraulische Folgesteuerung für Seitenteilschwenk-Hydrozylinder und Tastradschwenk-Hydrozylinder so ausgelegt, dass die Tasträder erst dann um ihre Schwenkachsen am Seitenteil in die Transportstellungs-Lenkposition parallel zur Fahrtrichtung verschwenkt werden, wenn zuvor die Seitenteile vollständig in die beigeschwenkten, der Transportstellung entsprechenden Endlagen gebracht und verriegelt worden sind. Die Folgesteuerung ist erforderlich, damit die gelenkten Tasträder während des Umstellvorgangs in der Bewegungsrichtung der Seitenteile ausgerichtet bleiben, bis diese die Transportstellung erreicht haben und verriegelt sind. Deshalb hat die Folgesteuerung solange zu warten, ehe auch die Tasträder verschwenkt werden. Die Achsen der Zinkenkreisel sind in der Arbeitsstellung nach vorne schräggestellt, so dass der Tiefpunkt jeder Umlaufbahn in Fahrrichtung vorne liegt. Damit auch in unebenem Gelände der für ein gutes Arbeitsergebnis wichtige Bodenabstand des geneigten Zinkenkreisels stets eingehalten wird, wäre es zweckmäßig, das Tastrad mit seiner Bodenaufstandsfläche möglichst nahe an dem vorderen Tiefpunkt der Zinkenumlaufbahn, also vor dem Kreiselmittelpunkt, anzuordnen. In der bekannten Heuwerbungsmaschine stimmt die Schwenkachse jedes Tastrades jedoch mit der Kreiselachse überein, so dass die Bodenaufstandsfläche des Tastrads in der Arbeitsstellung ungünstig weit vom Tiefpunkt beabstandet ist. Durch die Verschwenkung der Tasträder an den bereits zueinander verriegelnden Seitenteilen entstehen an den Luftreifen starke Querbelastungen. Damit die Querbelastungen in der Bodenaufstandsfläche möglichst gering bleiben, ist jedes Tastrad nahe an der Kreiselachse platziert. Daraus resultieren jedoch Nachteile bei der Bodenabtastung, für welche die Anordnung der Tasträder möglichst nahe an der Umlaufbahn bzw. nahe beim Tiefpunkt der Umlaufbahn vorteilhafter wäre. Kurz vor Erreichen der Transportstellung haben die Seitenteilschwenk-Hydrozylinder sehr ungünstige Wirkhebelarme. Zum Einrasten der die Seitenteile in der Transportstellung verbindenden Verriegelung ist dann ein zusätzlicher Kraftaufwand erforderlich, der kräftig dimensionierte Seitenteilschwenk-Hydrozylinder bedingt. Als Folge der zeitlichen Abfolge der einzelnen Umstellvorgänge dauert die gesamte Umstellung unzweckmäßig lange.

Bei der als Heumaschine ausgebildeten Landmaschine gemäß EP-A-224667 sind an den Seitenteilen zwangsgelenkte Tasträder angeordnet, wobei die Lenkposition der Tasträder über Koppelstangen ab Beginn der Umstellung der Seitenteile in die Transportstellung automatisch und allmählich nachgeführt wird.

Bei der als Heumaschine ausgebildeten Landmaschine gemäß EP-A-956759 und EP-A-947129 werden lenkbare Tasträder an den Seitenteilen ebenfalls ab Beginn der Umstellung der Seitenteile in die Transportstellung automatisch allmählich nachgeführt.

Der Erfindung liegt die Aufgabe zugrunde, eine Landmaschine, insbesondere eine Heuwerbungsmaschine mit großer Arbeitsbreite, der eingangs genannten Art anzugeben, bei der auch im unebenen Gelände der für ein gutes Arbeitsergebnis wichtige Bodenabstand der Zinkenkreisel eingehalten wird, d. h. eine gute Bodenabtastung gegeben ist, und bei der die Transportstellung zügig und mit verringertem Kraftaufwand zuverlässig einstellbar ist.

Die gestellte Aufgabe wird mit den Merkmalen des Patentanspruchs 1 gelöst.

Da die gelenkten Tasträder an den Seitenteilen in der Beischwenkphase der Seitenteile beginnend kurz vor Erreichen der Transportstellung und mit der Transportstellung endend in die Transportstellungs-Lenkposition verschwenkt werden und die Tastrad-Aufhängungsgeometrie an den Seitenbalken speziell konzipiert ist, entstehen das endgültige Beischwenken der Seitenteile in ihre der Transportstellung entsprechenden Endlagen unterstützende, kräftige Kraftkomponenten, so dass die Seitenteile trotz der dann ungünstigen Wirkhebelarme der Seitenteilschwenk-Hydrozylinder rasch, leicht und zügig in die Endlagen gelangen. Dabei werden exzessive Querbelastungen in den Bodenaufstandsflächen minimal gehalten, da die Kraftkomponenten nicht die Tasträder mit ihren Bodenaufstandsflächen auf dem Boden verlagern, sondern den jeweiligen Seitenteil in Relation zur Bodenaufstandsfläche in die Endlage drücken. Dadurch wird auch Zeit für die Beischwenkendphase eingespart, lassen sich die Seitenteile mit Unterstützung durch die Kraftkomponenten zuverlässig verriegeln, und kann die Transportfahrt sofort begonnen werden.

Um die das endgültige Beischwenken unterstützenden Kraftkomponenten durch die Tastradschwenk-Hydrozylinder zu erzeugen, die sozusagen den Seitenteil-Schwenkhydrozylindern in der Endphase kräftig assistieren, wird zwischen der Bodenaufstandsfläche und der Schwenkachse ein Abstand vorgesehen und ist die Schwenkachse relativ zur Bodenaufstandsfläche und zum Seitenteil so positioniert, dass die assistierende Kraftkomponente am Seitenteil erzeugt wird. Dies bewirkt das zügige endgültige Beischwenken trotz der dann ungünstigen Wirkhebelarme der Seitenteilschwenk-Hydrozylinder, und verkürzt den Zeitaufwand für die Umstellung der Landmaschine erheblich, zumal auch nach den Erreichen der Transportstellung keine Zeit mehr benötigt wird, um die Tasträder in die Transportstellungs-Lenkpositionen zu bringen. Die Transportfahrt kann sofort aufgenommen werden.

Bei einer zweckmäßigen Ausführungsform sind pro Seitenteil zumindest zwei Zinkenkreisel durch lenkbare Tasträder auf dem Boden abgestützt. Die jeweilige Tastrad-Schwenkachse ist mit deutlichem Abstand von der Kreiselachse fest positioniert. Auf diese Weise entsteht beim Verschwenken des Tastrads in die Transportstellungs-Lenkposition eine kräftige und lange wirkende Kraftkomponente zum endgültigen Beischwenken des Seitenteils. Ferner hat jedes Tastrad in der Arbeitsstellung bei schräggestellter Kreiselachse eine hinsichtlich der Bodenabtastung optimale Position nahe beim Tiefpunkt der Zinkenumlaufbahn.

Zweckmäßig liegt in der Arbeitsstellung der Landmaschine die Bodenaufstandsfläche zwischen der Kreiselachse und der Schwenkachse des Tastrads. Bei der Umstellung des Tastrad in die Transportstellungs-Lenkposition wird die Tastrad-Schwenkachse und damit der Seitenteil um die Bodenaufstandsfläche in Richtung zur Längsmittelachse der Landmaschine verlagert, wenn sich die Seitenteile bereits kurz vor der Transportstellung befinden.

Bei einer zweckmäßigen Ausführungsform ist an der Kreiselachse unter dem Zinkenkreisel ein den deutlichen Versetzabstand definierender, in etwa zur Kreiselachse senkrechter Tragarm für die Tastrad-Schwenkachse montiert. Am Tragarm kann der Tastrad-Schwenkhydrozylinder angebracht und an einem an der Schwenkachse befestigten Lenker angelenkt sein. Das Tastrad wird seinerseits an einem den Abstand zwischen der Schwenkachse und der Bodenaufstandsfläche definierenden Achsträger abgestützt.

Das Überführen der Seitenteile zwischen den Arbeits- und Transportstellungen könnte beispielsweise auch durch Fahrbewegungen der Zugmaschine unter Nutzen der lenkbaren Tasträder durchgeführt werden. Zweckmäßig werden jedoch die Seitenteile ebenfalls mit Seitenteilschwenk-Hydrozylindern, vorzugsweise doppelt wirkenden Hydrozylindern, hin- und her verschwenkt. Diese Hydrozylinder sind günstig am Mittelteil des Maschinenbalkens angelenkt.

Bei einer zweckmäßigen Ausführungsform, mit Tastradschwenk-Hydrozylindern und Seitenteil-Hydrozylindern, jeweils als doppelt wirkender Hydrozylinder, weist die Folgesteuerung zwei Arbeitsleitungen auf, wobei in der einen Arbeitsleitung stromauf der Tastradschwenk-Hydrozylinder ein Sperrventil angeordnet ist. Das Sperrventil wird mittels eines Entsperrglieds entsperrt, das abhängig vom Fortschritt der Umstellung in die Transportstellung kurz vor Erreichen der Transportstellung aktivierbar ist. Der genaue Zeitpunkt des Beginns der Verschwenkung des Tastrads bzw. die Zeitdauer oder die Verlaufskurve der Verschwenkung lassen sich individuell an die jeweiligen Forderungen anpassen, beispielsweise um dann die assistierenden Kraftkomponenten zu erzeugen, wenn die Wirkhebelarme der Seitenteil-Schwenkhydrozylinder ungünstig werden und gleichzeitig zum Verriegeln ein erhöhter Kraftaufwand erforderlich ist.

Damit die Umstellungen der beiden Seitenteile und auch der Tasträder synchron ablaufen, ist es zweckmäßig, in der anderen Arbeitsleitung einen hydraulischen Stromteiler zu installieren, der den Hydraulikstrom unabhängig von den jeweiligen Gegendrücken so verteilt bzw. die Strömungsraten so regelt, dass sich an beiden Seiten gleiche Schwenkhübe bzw. Schwenkgeschwindigkeiten und synchrone Bewegungsabläufe ergeben.

Günstig lässt sich der jeweilige Schwenkwinkel des Tastrads um die Schwenkachse in die Arbeitsstellungs-Lenkposition durch verstellbare Anschläge variieren, so dass in der Arbeitsstellung unterschiedliche Fahrtrichtungen wählbar sind. Für die normale Arbeitsfahrt wird der Maschinenbalken beispielsweise senkrecht zur Fahrtrichtung ausgerichtet. Zum Feldrandräumen kann jedoch eine Schrägstellung des Maschinenbalkens zur einen oder zur anderen Seite gewählt werden. Von den unterschiedlichen Anschlägen könnte einer auch durch den jeweiligen Hydrozylinder selbst definiert werden, der dann auf Anschlag verstellt wird.

Bei einer zweckmäßigen Ausführungsform sind die Tastradschwenk-Hydrozylinder auf einen niedrigeren Ansprechdruck ausgelegt als die Seitenteil Schwenk-Hydrozylinder. Die Zylinder können Differenzialzylinder sein. Durch diese Auslegung wird automatisch bei der Umstellung von der Transportstellung in die Arbeitsstellung zunächst jedes Tastrad in die Arbeitsstellungs-Lenkposition umgestellt, ehe die Seitenteile wegen des dann verringerten Bewegungswiderstands zu schwenken beginnen. Dies verringert den Bewegungswiderstand für die Seitenteile erheblich, da diese bequem auf den Tasträdern in die Arbeitsstellung rollen.

Zweckmäßig ist auch eine mechanische, vorzugsweise selbsttätig einrückbare, Verriegelung für die Seitenteile in der Transportstellung. Diese Verriegelung wirkt als zusätzliche Sicherheitseinrichtung zu den Hydrozylindern, und bleibt wirksam, falls das Hydrauliksystem ausfallen sollte. Besonders zweckmäßig erfolgt das Einrücken der Verriegelung unter Assistenz durch die beim Verschwenken der Tasträder in die Transportstellungs-Lenkposition erzeugten Kraftkomponenten an den Seitenteilen, oder zumindest mit deren Unterstützung. Damit ist sichergestellt, dass die Seitenteile in der Transportstellung mechanisch verriegelt sind, wenn auch die Tasträder die Transportstellungs-Lenkposition erreicht haben.

Anhand der Zeichnung wird eine Ausführungsform des Erfindungsgegenstandes erläutert. Es zeigen:
- Fig. 1: eine Seitenansicht einer als Heuwerbungsmaschine ausgebildeten Landmaschine in der Transportstellung,
- Fig. 2: eine Draufsicht zu Fig. 1
- Fig. 3: eine Umstellsituation der Landmaschine kurz vor Erreichen der Transportstellung in einer Seitenansicht,
- Fig. 4: eine Draufsicht zu Fig. 3,
- Fig. 5: eine Ansicht der Landmaschine quer zur Fahrtrichtung in der Arbeitsstellung, wobei auch Details zur Transportstellung angedeutet sind,
- Fig. 6: eine Perspektivansicht zu Details einer Tastradaufhängung,
- Fig. 7: eine vergrößerte Detaildraufsicht zur Verdeutlichung bestimmter geometrischer Verhältnisse bei einem Tastrad,
- Figl. 8: ein Blockschaltbild einer hydraulischen Folgesteuerung, und
- Fig. 9: eine perspektivische Detailansicht einer mechanischen Verriegelung in einer Verriegelungsstellung entsprechend der Transportstellung von Fig. 2.

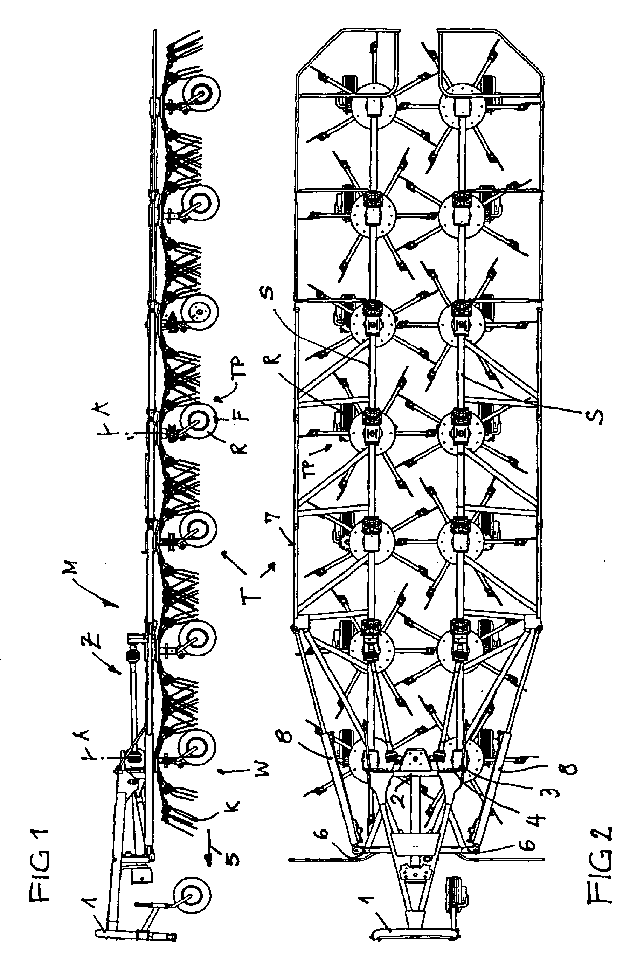

Eine in den Fig. 1 und 2 in einer Transportstellung T gezeigte Landmaschine M ist eine Heuwerbungsmaschine Z mit großer Arbeitsbreite z. B. ein Kreiselzettwender, die in Fahrtrichtung 5 von einem nicht gezeigten Zugfahrzeug gezogen wird. Zum Anschließen der Landmaschine M an das Zugfahrzeug dient eine Anhängevorrichtung 1 mit einem starren Mittelteil 2 eines Maschinenbalkens, der aus dem Mittelteil 2 und daran um annähemd vertikale Schwenkachsen 3 z. B. nach vorne aus- und nach hinten beischwenkbaren Seitenteilen S besteht. Die Seitenteile S tragen mehrere in einander greifende Werkzeuge W, die als Zinkenkreisel K ausgebildet sind. Die Seitenteile S sind zusätzlich durch im Wesentlichen horizontale Schwenkachsen 4 in mehrere Teile unterteilt, beispielsweise bei jedem Zinkenkreisel K, der um eine Kreiselachse A drehbar ist. An mit dem Mittelteil 2 vereinigten, seitlichen Trägern 6 sind Seitenteilschwenk-Hydrozylinder 8 angelenkt, die zu mit den Seitenteilen S verbundenen Außenrahmen 7 führen. Die Hydrozylinder 8 sind zweckmäßig doppelt wirkende Differenzialzylinder. Unter zumindest einiger Zinkenkreiseln K sind lenkbare Tasträder R angeordnet, die den Bodenabstand der Zinkenkreisel K in der Arbeitsstellung und in der Transportstellung T bestimmen. Zumindest zwei Tasträder R pro Seitenteil S sind lenkbar, weitere können selbstlenkend sein.

In den Fig. 1 und 2 befinden sich die Tasträder R in ihren Transportstellungs-Lenkpositionen TP, in denen sie in Bodenaufstandsflächen F auf dem Boden abgestützt sind. Die Seitenteile S sind zum Einhalten der höchstzulässigen Transportbreite der Landmaschine M um die Schwenkachsen 3 bis in eine im Wesentlichen zueinander parallele Relativposition beigeschwenkt und, vorzugsweise, mechanisch und hydraulisch blockiert. Auch die Transportstellungs-Lenkpositionen TP der gelenkten Tasträder R können hydraulisch und/oder mechanisch blockiert sein.

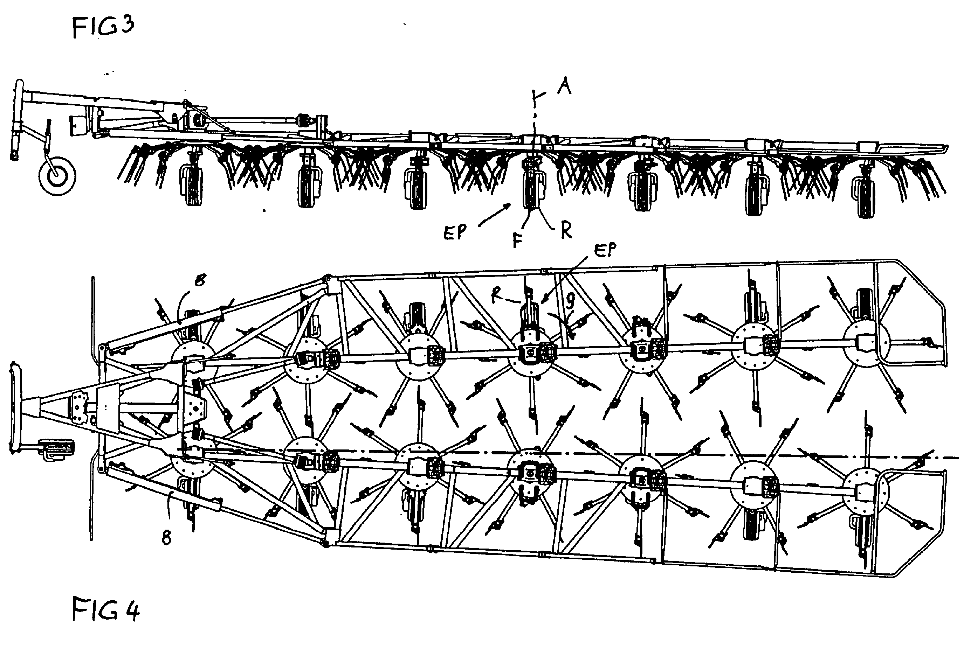

Die Fig. 3 und 4 zeigen die Landmaschine M in einer Beischwenkphase kurz vor Erreichen der in der Fig. 1 und 2 gezeigten Transportstellung, d. h. die Seitenteile S sind gerade noch nicht in den durch eine strichpunktierte Linie angedeuteten Endlagen angekommen, sondern die Umstellung in die Transportstellung T ist noch im Fortschritt, beispielsweise bewirkt durch die Hydrozylinder 8. Die lenkbaren Tasträder R befinden sich noch weitgehend in ihren Arbeitsstellungs-Lenkpositionen EP, in denen sie im Wesentlichen quer zum Seitenteil S und an der Außenseite des Seitenteils S stehen.

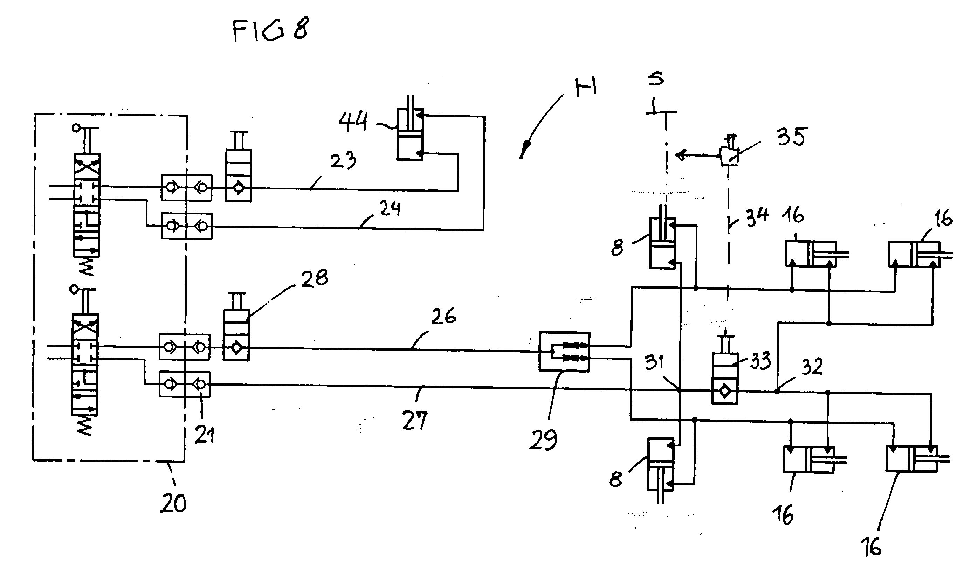

Die Betätigung der Hydrozylinder 8 erfolgt über eine in Fig. 8 gezeigte hydraulische Folgesteuerung H, die so ausgelegt ist, dass in etwa schon ab der in Fig. 4 gezeigten Relativposition der beiden Seitenteile S auch die Umstellung der gelenkten Tasträder R aus der Arbeitsstellungs-Lenkposition EP in die in Fig. 2 gezeigte Transportstellungs-Lenkposition TP mittels Hydrozylindern 16 erfolgt, genauer in der Beischwenkphase beginnend kurz vor der Transportstellung und mit der Transportstellung endend. Bei dieser Verschwenkung (Pfeil 9 in Fig. 4) werden Kraftkomponenten erzeugt, die die Wirkung der Hydrozylinder 8 auf die Seitenteile S bis in die Endlagen unterstützen. Die Umstellung der Tasträder R erfolgt in Fig. 4 wie durch einen Pfeil 9 angedeutet.

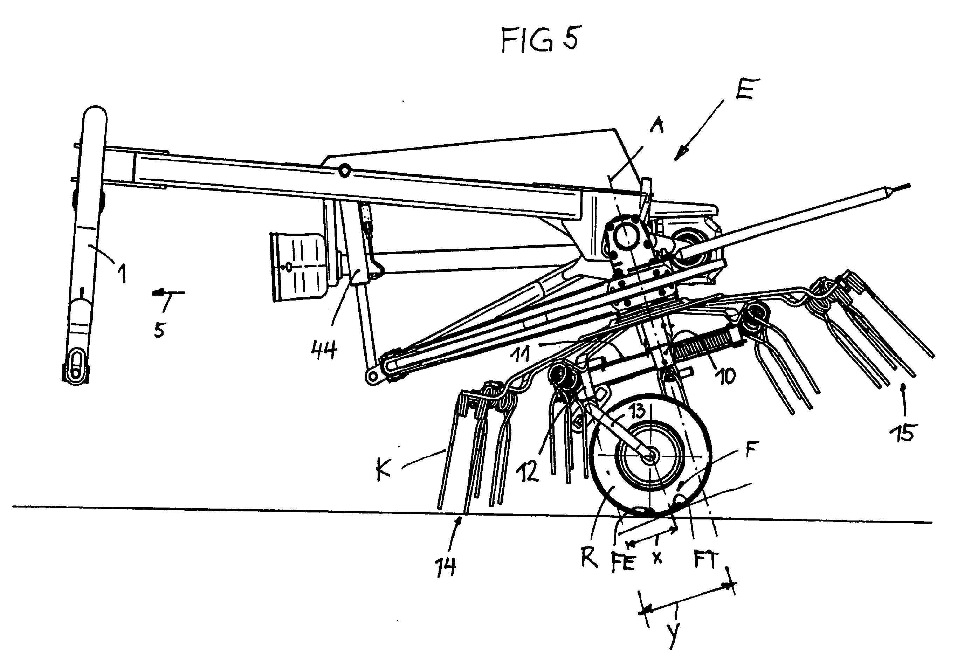

Fig. 5 ist eine Seitenansicht der Landmaschine M in der Arbeitsstellung E, d. h. die Seitenteile S sind in Verlängerung des Mittelteils 2 ausgestreckt, und sämtliche Kreiselachsen A sind mittels wenigstens eines Hydrozylinders 44 so um die Längssachse des Maschinenbalkens schräggestellt, dass die Umlaufbahn jeden Zinkenkreisels K in Fahrtrichtung 5 vome einen Tiefpunkt 14 und in Fahrtrichtung 5 hinten einen Hochpunkt 15 durchläuft.

An der Kreiselachse A bzw. einem Achsgehäuse 10 des Zinkenkreisels K ist ein Tragarm 11 in etwa senkrecht zur Kreiselachse A befestigt, der eine zur Kreiselachse A im Wesentlichen parallele Schwenkachse 12 für das Tastrad R lagert. Zwischen der Schwenkachse 12 und der Kreiselachse A ist ein Versetz-Abstand Y vorgesehen, derart, dass die Schwenkachse 12 in der Arbeitsstellung E in Fahrtrichtung vor der Kreiselachse A steht und die Bodenaufstandsfläche F (F_{E}) des Tastrades R möglichst nahe beim Tiefpunkt 14 liegt, auf jedem Fall vom Hochpunkt 15 weiter entfernt ist als vom Tiefpunkt 14.

Das Tastrad R ist an der Schwenkachse 12 mittels eines Achsträgers 13 gehaltert, derart, dass zwischen der Bodenaufstandsfläche F (F_{T}) in der Transportstellung T und der Schwenkachse 12 ein Abstand X vorliegt, der beispielsweise in etwa die Hälfte des Versetz-Abstands Y beträgt.

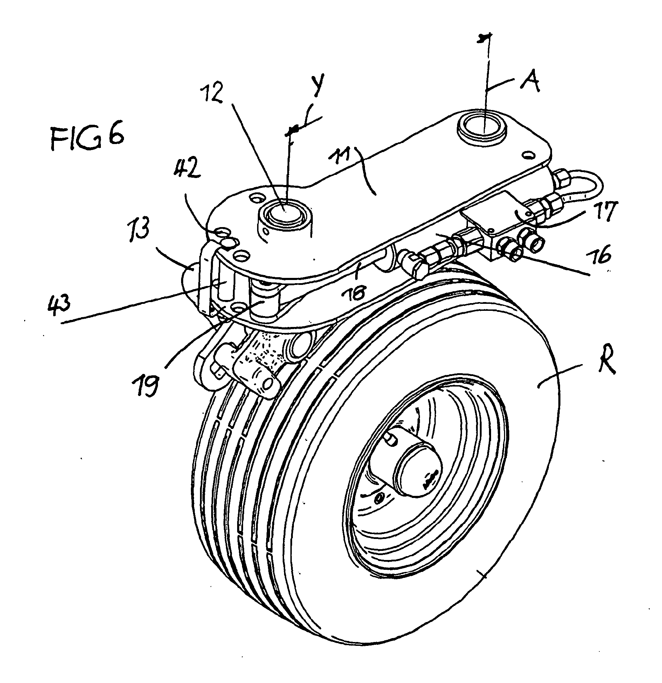

Fig. 6 verdeutlicht die Tastradaufhängung mittels des Tragarms 11 an der Kreiselachse A, wobei der Tragarm 11 den Versetz-Abstand Y zwischen der Kreiselachse A und der Schwenkachse 12 definiert. Der Achsträger 13 ist an der Schwenkachse 12 beispielsweise schwenkbar gelagert und mit einem Lenker 19 in Verbindung, an dem eine Kolbenstange 18 des Tastrads Schwenk-Hydrozylinders 16 angelenkt ist, der am Tragarm 11 festgelegt ist. Ein Hydraulikverteiler 17 mit Anschlüssen für nicht gezeigte Hydraulikleitungen ist direkt am Hydrozylinder 16 angeordnet.

Um das Tastrad R nicht nur über 90 Grad hin- und her zu verstellen, sondern beispielsweise zum Feldrandräumen einen Winkel bis zu insgesamt etwa 115 Grad einstellen zu können, oder einen Winkel von etwa 75 Grad, d. h. um den Maschinenbalken zur einen oder anderen Seite schräg zur Fahrtrichtung 5 auszurichten, sind im Tragarm 11 verstellbare Anschläge 42, 43 für z. B. den Lenker 19 vorgesehen. Die verstellbaren Anschläge 42, 43 können mehrere Einstecköffnungen 42 für einen umsteckbaren Steckbolzen 43 umfassen. Das Tastrad R ist beispielsweise luftbereift und hat einen Durchmesser beispielsweise größer als den Versetzabstand Y.

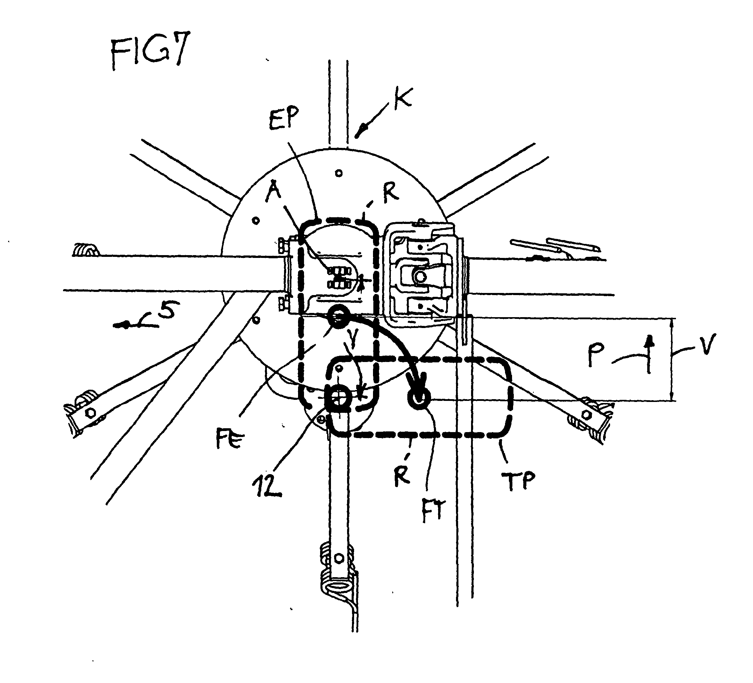

Fig. 7 verdeutlicht die Geometrie der Tastrad-Aufhängung in einer Detaildraufsicht. Das Tastrad R ist in der Arbeitsstellungs-Lenkposition EP und in der Transportstellungs-Lenkposition TP jeweils in dicken gestrichelten Linien angedeutet. Bei der Umstellung des Tastrades R von der Arbeitsstellungs-Lenkposition EP in Richtung des Pfeils 9 in die Transportstellungs-Lenkposition TP um die Schwenkachse 12 möchte sich die Bodenaufstandsfläche FE über einen Bogenhub V verlagern. Aufgrund der Reibung zwischen dem Tastrad R und dem Boden entsteht dabei jedoch eine Kraftkomponente P, die in etwa quer zum Seitenteil S gerichtet ist und diesen über die Schwenkachse 12 und die Kreiselachse A in die der Transportstellung T entsprechende Endlage bewegt, unterstützend zur Krafteinwirkung des Hydrozylinders 8. In der Transportstellungs-Lenkposition TP befindet sich somit das Tastrad R mit dem Abstand Y an der Außenseite des Seitenteils S und in paralleler Ausrichtung zum Seitenteil S.

Die hydraulische Folgesteuerung in Fig. 8 ist so ausgelegt, dass bei einer Umstellung der Landmaschine M aus der Arbeitsstellung E in die Transportstellung T zunächst die Seitenteile S bis in etwa in die Positionen von Fig. 3 beigeschwenkt werden, ehe die gelenkten Tasträder aus ihren Arbeitsstellungs-Lenkpositionen EP in die Transportstellungs-Lenkpositionen TP umgestellt werden. Die hydraulische Folgesteuerung H benutzt das Hydrauliksystem eines Zugfahrzeuges 20. Zu den jeweiligen Hydrozylindern führende Arbeitsleitungen 23, 24 und 26, 27 sind über Schnelltrennkupplungen 21 an das Hydrauliksystem des Zugfahrzeugs 20 angeschlossen.

Die Arbeitsleitungen 23, 24 führen beispielsweise zu dem Hydrozylinder 44 für die Schrägstellung oder Aufrichtung der Kreiselachsen A. Die Arbeitsleitungen 26, 27 (in der Arbeitsleitung 26 kann ein Sicherheitsabsperrhahn 28 vorgesehen sein) führen hingegen zu den parallel angeschlossenen Hydrozylindern 8 und 16 für die Seitenteile S und die Tasträder R. Durch Druckbeaufschlagen der Arbeitsleitung 26 erfolgt die Umstellung der Landmaschine von der Transportstellung T in die Arbeitsstellung E, und auch die Umstellung der Tasträder R aus ihren Transportsstellungs-Lenkpositionen TP in die Arbeitsstellungs-Lenkpositionen EP. In der Arbeitsleitung 26 ist ein hydraulischer Stromteiler 29 angeordnet, von dem sich die Arbeitsleitung zu den Hydrozylindern 8, 16 an beiden Seitenteilen aufzweigt. Verdrängtes Hydraulikmedium wird über die Arbeitsleitung 27 zurückgeführt.

Durch Druckbeaufschlagen der Arbeitsleitung 27 erfolgt die Umstellung der Landmaschine M von der Arbeitsstellung E in die Transportstellung T. Die Arbeitsleitung 27 zweigt sich an einem Knoten 31 zu den Hydrozylindern 8 beider Seitenteile S auf. Zwischen dem Knoten 31 und einem weiteren Knoten 32 in der Arbeitsleitung 27 ist ein Sperrventil 33 (beispielsweise ein entsperrbares Rückschlagventil oder ein 2/2-Wegesitzventil) enthalten, das über eine Signalleitung 34 oder einen Seilzug beispielsweise an ein Entsperrglied 35 angeschlossen ist, das den Schwenkwinkel der Seitenteile S oder den Ausfahrhub der Hydrozylinder 8 abgreift und das Sperrventil 33 kurz vor Erreichen der Transportstellung entsperrt. Am Knoten 32 zweigt sich die Arbeitsleitung 27 zu den Hydrozylindern 16 an beiden Seitenteilen S auf.

Bei der Umstellung von der Arbeitsstellung E in die Transportstellung T ist der Hydraulikmediumstrom zu den Hydrozylindern 16 zunächst durch das Sperrventil 33 gesperrt. Kurz bevor die Seitenteile S ihre Endlagen erreichen, abgetastet durch das Entsperrglied 35, wird das Sperrventil 33 entsperrt, so dass die Hydrozylinder 16 die Tasträder R aus ihren Arbeitsstellungs-Lenkpositionen EP in die Transportstellungs-Lenkpositionen TP umstellen. Dabei entstehen, wie erläutert durch die Verlagerung der Schwenkachsen 12 relativ zu den Bodenaufstandsflächen F die die Seitenteile in ihre Endlagen drückende Kraftkomponenten P.

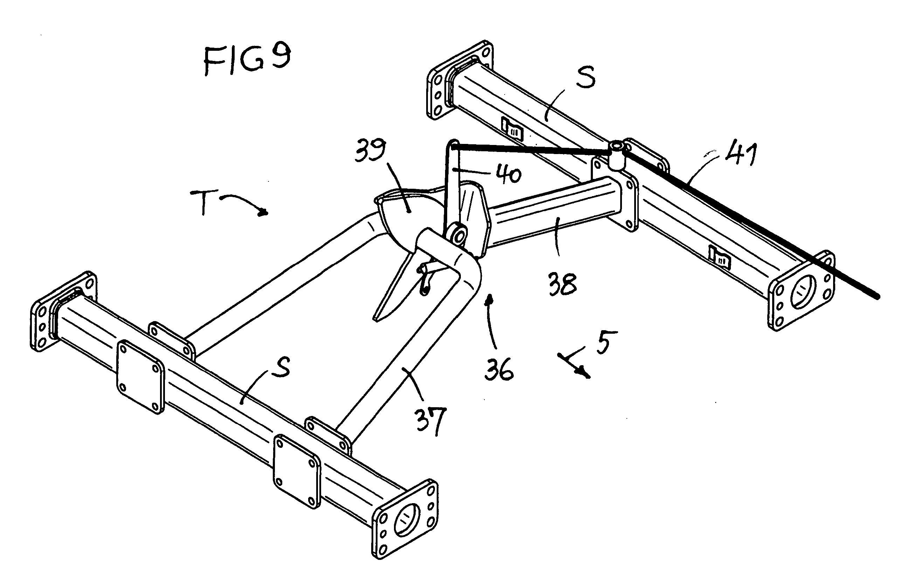

Diese Kraftkomponenten P können auch benutzt werden, um die Seitenteile S in den Endlagen mechanisch zu verriegeln, und zwar mittels der beispielsweise in Fig. 9 gezeigten Verriegelung 36. Die mechanische Verriegelung 36 in Fig. 9 fixiert die Seitenteile S in der Transportstellung T und stellt eine von der Hydraulikanlage unabhängige Sicherheitseinrichtung dar, welche das Ausschwenken der Seitenteile S bei einer Störung im Hydrauliksystem oder durch eine Fehlbedienung verhindert.

Die mechanische Verriegelung 36 in Fig. 9 weist eine beispielsweise federbelastete Sperrklinke 39 an einem mit einem Seitenteil S verbundenen Querträger 38 auf. Die Sperrklinke 39 arbeitet mit einem U-förmigen Riegel 37 am anderen Seitenteil S zusammen. Die Verriegelung 36 ist über ein Zugglied 41 beispielsweise vom Zugfahrzeug aus lösbar, wenn es erforderlich wird, die Landmaschine M aus der Transportstellung T wieder in die Arbeitsstellung E umzustellen.

Nach oder mit dem Lösen der Verriegelung 36 wird zur Umstellung in die Arbeitsstellung E mit der Folgesteuerung H von Fig. 8 die Arbeitsleitung 26 druckbeaufschlagt, so dass über den Stromteiler 29 beispielsweise die kolbenstangenseitigen Kammern der Hydrozylinder 8 und 16 druckbeaufschlagt werden. Die Hydrozylinder 16 für die Tasträder sind z. B. so ausgelegt, dass sie einen wesentlich niedrigeren Ansprechdruck haben als die Hydrozylinder 8 für die Seitenteile S. Dies bedeutet, dass, ehe die Seitenteile S auszuschwenken beginnen, zunächst die Tasträder R aus ihren Transportstellungs-Lenkpositionen TP in die Arbeitsstellungs-Lenkpositionen EP umgestellt sind, ehe die Seitenteile S auszuschwenken beginnen. Dies erleichtert den Kraftaufwand zum Ausschwenken der Seitenteile S, die dann auf den Tasträdern rollen, und entlastet auch die Tasträder R und deren Reifen.

## Patentansprüche

1. Landmaschine (M), insbesondere Heuwerbungsmaschine (Z), mit großer Arbeitsbreite, mit an einem Maschinenbalken angeordneten und über mehrere Tasträder (R) auf dem Boden abgestützten Zinkenkreiseln (K), wobei der um im Wesentlichen vertikale Schwenkachsen (3) an einem Mittelteil (2) in eine Transportstellung (T) parallel zur Fahrtrichtung (5) schwenkbare Maschinenbalken durch horizontale Schwenkachsen (4) in Einzeltragbalken unterteilt ist und alle Zinkenkreisel (K) auf die Seitenteile (S) verteilt sind, und mit zumindest einer Steuerungsvorrichtung (H) zum automatischen Verschwenken gelenkter Tasträder (R) zumindest in die Fahrtrichtung (5), **dadurch gekennzeichnet, dass** die gelenkten Tasträder (R) durch die Steuerungsvorrichtung (H) zur Unterstützung der Überführung der Seitenteile S) in die Transportstellung (T) während des Schwenkvorgangs der Seitenteile (S) in einer Phase beginnend kurz vor der Transportstellung und mit der Transportstellung endend in Fahrtrichtung (5) verschwenkbar sind.

2. Landmaschine gemäß Anspruch 1, **dadurch gekennzeichnet, dass** zwischen einer Bodenaufstandsfläche (F) des gelenkten Tastrades (R) und einer im Wesentlichen senkrechten, am Seitenteil fixpositionierten Schwenkachse (12) zum Verschwenken des Tastrades (R) zwischen einer Arbeitsstellungs-Lenkposition (EP) im Wesentlichen quer zum Seitenteil (S) und einer Transportsstellungs-Lenkposition (TP) in etwa parallel zum Seitenteil (S) ein Abstand (X) vorgesehen ist, und dass die Schwenkachse (12) relativ zur Bodenaufstandsfläche (F) so am Seitenteil (S) positioniert ist, dass bei Verschwenkung des Tastrads (R) in die Transportstellungs-Lenkposition (TP) eine das Beischwenken des Seitenteils (S) in die Transportstellung (T) unterstützende Kraftkomponente (P) am Seitenteil (S) erzeugt wird.

3. Landmaschine gemäß Anspruch 1 oder 2, **dadurch gekennzeichnet, dass** pro Seitenteil (S) zumindest zwei Zinkenkreisel (K) durch mit ihren Schwenkachsen (12) den Kreiselachsen (A) zugeordnete Tasträder (R) auf dem Boden abgestützt sind, und dass die jeweilige Schwenkachse (12) an der in der Arbeitsstellung (E) in Fahrtrichtung (5) weisenden Seite der Kreiselachse (A) mit einem Versetzabstand (Y) von der Kreiselachse (A) angeordnet ist.

4. Landmaschine gemäß Ansprüchen 3, **dadurch gekennzeichnet, dass** in der Arbeitsstellung (E) die Bodenaufstandsfläche (F) des Tastrads (R) zwischen der Kreiselachse (A) und der Schwenkachse (12) liegt, und dass beim Verschwenken des Tastrades (R) aus der Arbeitsstellungs-Lenkposition (EP) in die Transportstellungs-Lenkposition (TP) vor Erreichen der Transportstellung (T) die Schwenkachse (12) um die Bodenaufstandsfläche (F) in Richtung zu Längsmittelachse der Landmaschine (M) verlagert wird.

5. Landmaschine gemäß wenigstens einem der vorhergehenden Ansprüche, **dadurch gekennzeichnet, dass** an der Kreiselachse (A) unter dem Zinkenkreisel (K) ein den Versetzabstand (Y) definierender, in etwa zur Kreiselachse (A) senkrechter Tragarm (11) für die Schwenkachse (12) montiert ist, dass am Tragarm (11) ein Tastradschwenk-Hydrozylinder (16) angebracht und an einem an der Schwenkachse (12) befestigten Lenker (19) angelenkt ist, und dass das Tastrad (R) an einem den Abstand (X) zwischen der Schwenkachse (12) und der Bodenaufstandsfläche (F) zumindest in etwa definierenden Achsträger (13) gehaltert ist.

6. Landmaschine nach wenigstens einem der vorhergehenden Ansprüche, **dadurch gekennzeichnet, dass** die Seitenteile (S) mittels am Mittelteil (2) angelenkter Hydrozylinder (8), insbesondere doppelt wirkender Hydrozylinder, zwischen den Arbeits- und Transportstellungen (ET) schwenkbar sind.

7. Landmaschine nach Anspruch 6, **dadurch gekennzeichnet, dass** die Folgesteuerung (H) zwei Arbeitsleitungen (26, 27) aufweist, an die die Seitenteilschwenk-Hydrozylinder (8) und die Tastradschwenk-Hydrozylinder (16) parallel angeschlossen sind, dass in der einen Arbeitsleitung (27) stromauf der Tastradschwenk-Hydrozylinder (16) ein Sperrventil (33) angeordnet ist, das durch ein Entsperrglied (35) entsperrbar ist, das abhängig vom Fortschritt der Umstellung der Landmaschine (M) von der Arbeitsstellung (E) in die Transportstellung (T) kurz vor Erreichen der Transportstellung (T) aktivierbar ist.

8. Landmaschine nach Anspruche 7, **dadurch gekennzeichnet, dass** in der anderen Arbeitsleitung (26) ein hydraulischer Stromteiler (29) installiert ist.

9. Landmaschine nach wenigstens einem der vorhergehenden Ansprüche, **dadurch gekennzeichnet, dass** der jeweilige Schwenkwinkel des Tastrads (R) um die Schwenkachse (12) in die Arbeitsstellungs-Lenkposition (EP) durch verstellbare Anschläge (42, 43), vorzugsweise im Tragarm (11), variierbar ist, so dass in der Arbeitsstellung (E) unterschiedliche Fahrrichtungen der Landmaschine (M) wählbar sind.

10. Landmaschine nach Anspruche 9, **dadurch gekennzeichnet, dass** in der mittels der verstellbaren Anschläge (42, 43) gewählten Fahrtrichtung, der jeweilige Seitenteil (S) oder der Maschinenbalken entweder senkrecht zur Fahrtrichtung (5) oder in einem Winkel rechts oder links schräg zur Fahrtrichtung (5) angeordnet ist.

11. Landmaschine nach wenigstens einem der vorhergehenden Ansprüche 6 bis 10, **dadurch gekennzeichnet, dass** die Tastradschwenk-Hydrozylinder (16) in zumindest einer Richtung auf einen niedrigeren Ansprechdruck ausgelegt sind als die Seitenteilschwenk-Hydrozylinder (8).

12. Landmaschine nach wenigstens einem der vorhergehenden Ansprüche, **dadurch gekennzeichnet, dass** eine mechanische, vorzugsweise selbsttätig einrückbare, Verriegelung (36) für die in die Transportstellung (T) beigeschwenkten Seitenteile (S) vorgesehen ist, und dass, vorzugsweise, das Einrücken der Verriegelung (36) durch die beim Verschwenken der Tasträder (R) in die Transportstellungs-Lenkposition (TP) erzeugten Kraftpumpkomponenten (P) unterstützbar ist.

## Claims

1. Agricultural machine (M), in particular a hay raking machine (Z) having a large working width, comprising tine rotors (K) arranged at a machine bar and being supported on the ground by means of several ground wheels (R), the machine bar having side parts (S) which can be pivoted about substantially vertical pivot axes (3) at a middle part (2) into a machine transport position (T) parallel to a machine travelling direction (5), the machine bar being subdivided by horizontal pivot axes (4) into single carrier bars, all provided tine rotors (K) being distributed on the side parts (S), and at least one control device (H) for automatically pivoting steerable ground wheels (R) at least into positions parallel to the travelling direction (5), **characterised in that** the steerable ground wheels (R) are pivoted by the control device (H) into the position parallel to the travelling direction (5) for assisting during a final phase of the pivoting movement transfer of the side parts (S) into the transport position (T) within a transfer phase beginning shortly before the side parts (S) reach the transport position (T) of the side parts (S) and ending when the side parts (S) reach the transport position (T).

2. Agricultural machine according to claim 1, **characterised in that** a distance (X) is provided between a ground contacting area (F) of the steerable ground wheel (R) and a substantially vertical pivot axis (12) fixedly positioned at the side part (S) for pivoting the ground wheel (R) between a steering position (EP) substantially crosswise to the side parts (S) and corresponding to the working position (E) and a steering position (TP) substantially parallel to the side part (S) and corresponding to the transport position (T), and that the pivot axis (12) is positioned at the side part (S) in relation to the ground contacting area (F) such that during the pivot movement of the ground wheel (R) into the steering position (TP) corresponding to the transport position (T) a force component (P) is generated by the ground wheel (R) at the side part (S), which force component (P) assists the final pivot movement of the side part (S) into the transport position (T).

3. Agricultural machine according to claim 1 or claim 2, **characterised in that** at least two tine rotors per side part (S) are supported on the ground by steerable ground wheels (R), the pivot axes (12) of the ground wheel (R) being functionally associated to the rotor axes (A), and that the respective pivot axis (12) is arranged with a displacement distance (Y) from the rotor axis (A) at the side of the rotor axis (A) which side faces in the working position (A) in travelling direction (5).

4. Agricultural machine according to claims 1 to 3, **characterised in that** the ground contacting area (F, F_{E}) of the ground wheel (R) is situated in a machine working position (E) between the rotor axis (A) and the pivot axis (12), and that during the pivot movement of the ground wheel (R) from the steering position (EP) corresponding to the machine working position (E) into the steering position (TP) corresponding to the machine transport position (T) and before reaching the machine transport position (T) the pivot axis (12) is displaced about the ground contacting area (F) in a direction towards a longitudinal centre axis of the agricultural machine (M).

5. Agricultural machine according to at least one of the preceding claims, **characterised in that** a support arm (11) for the pivot axis (12) is mounted at the rotor axis (A) and below the tine rotor (K), the support arm (11) extending about perpendicular to the rotor axis (A) and defining the displacement distance (Y), that a hydro-cylinder (16) for pivoting the ground wheel (R) is attached at the support arm (11) and is linked to a link (19) attached at the pivot axis (12), and that the ground wheel (R) is suspended at an axle carrier (13) substantially defining the distance (X) between the pivot axis (12) and the ground contacting area (F, F_{E}).

6. Agricultural machine according to at least one of the preceding claims, **characterised in that** the side parts (S) are pivoted between the machine working position (E) and the machine transport position (T) by hydro-cylinders (8) which are linked to the middle part (2), in particular by double-actuated hydro-cylinders.

7. Agricultural machine according to claim 6, **characterised in that** the sequence control (H) comprises two working lines (26, 27) to which the hydro-cylinders (8) for pivoting the side parts (S) and the hydro-cylinders (16) for pivoting the ground wheels (R) are connected in parallel, that a blocking valve (33) is arranged in the one working line (27) upstream of the hydro-cylinder(16) for pivoting the ground wheels (R), that the blocking valve (33) can be opened by a release member (35) which is actuated depending on the progress of the adjustment of the agricultural machine (M) from the machine working position (E) into the machine transport position (T) shortly before the machine transport position (T) is reached.

8. Agricultural machine according to claim 7, **characterised in that** a hydraulic flow divider (19) is installed in the other working line (26).

9. Agricultural machine according to at least one of the preceding claims, **characterised in that** the respective pivot angle range of the ground wheel (R) about the pivot axis (12) into the steering position (EP) corresponding to the machine working position (E) is variable by adjustable stops (42, 43), preferably provided in the support arm (11), to selectively adjust different working position machine orientations of the agricultural machine (M).

10. Agricultural machine according to claim 9, **characterised in that** in the respective working position machine orientation defined by the adjustable stops (42, 43) the respective side part (S) or the machine bar either is arranged perpendicular to the travelling direction (5) or with an angle to the right side or the left side obliquely in relation to the travelling direction (5).

11. Agricultural machine according to at least one of the preceding claims 6 to 10, **characterised in that** the hydro-cylinders (16) provided for pivoting the ground wheels (R) are designed for an operation in at least one operative direction to respond to a lower response pressure than the hydro-cylinders (8) provided for pivoting the side parts (S).

12. Agricultural machine according to at least one of the preceding claims, **characterised in that** a mechanical locking mechanism (36) is provided for locking the side parts (S) in the machine transport position (T), that the locking mechanism (36, preferably, is automatically engageable and that, preferably, the engagement of the locking mechanism (36) is assisted by the force components (P) generated by pivoting the ground wheels (R) into the steering positions (TP) corresponding to the transport position (T).

## Revendications

1. Machine agricole (M), en particulier une faneuse (Z), ayant une grande largeur de travail, avec des toupies à dents (K) disposées sur une poutre de machine et s'appuyant au sol par l'intermédiaire de plusieurs roues tâteuses (R), dans laquelle la poutre de machine pivotant autour d'axes de pivotement (3) substantiellement verticaux dans une partie centrale (2) dans une position de transport (T) parallèle au sens de la marche (5) est divisée par des axes de pivotement horizontaux (4) en poutres de support individuelles, et toutes les toupies à dents (K) sont réparties sur les parties latérales (S), et avec au moins un dispositif de commande (H) pour le pivotement automatique de roues tâteuses dirigées (R) au moins dans le sens de la marche (5), **caractérisée en ce que** les roues tâteuses dirigées (R) peuvent être amenées à pivoter par le dispositif de commande (H) pour assister le transfert des parties latérales (S) vers la position de transport (T) pendant l'opération de pivotement des parties latérales (S) dans une phase commençant juste avant la position de transport et se terminant par la position de transport dans le sens de la marche (5).

2. Machine agricole selon la revendication 1, **caractérisée en ce qu'**entre une surface de contact avec le sol (F) de la roue tâteuse dirigée (R) et un axe de pivotement (12) substantiellement vertical et positionné solidement à la partie latérale, pour le pivotement de la roue tâteuse (R) entre une position de direction de position de travail (EP) substantiellement transversalement à la partie latérale (S) et une position de direction de position de transport (TP) approximativement en parallèle à la partie latérale (S) , un espacement (X) est prévu, et **en ce que** l'axe de pivotement (12) est positionné par rapport à la surface de contact avec le sol (F) au niveau de la partie latérale (S) de telle sorte qu'en cas de pivotement de la roue tâteuse (R) dans la position de direction de position de transport (TP), une composante de force (P) assistant le rabattement de la partie latérale (S) dans la position de transport (T) est générée au niveau de la partie latérale (S).

3. Machine agricole selon la revendication 1 ou 2, **caractérisée en ce que** pour chaque partie latérale (S), au moins deux toupies à dents (K) s'appuient au sol par des roues tâteuses (R) attribuées aux axes de toupie (A) par leurs axes de pivotement (12), et **en ce que** l'axe de pivotement respectif (12) est disposé sur le côté tourné dans le sens de la marche dans la position de travail (E) avec un espacement de décalage (Y) par rapport à l'axe de toupie (A).

4. Machine agricole selon la revendication 3, **caractérisée en ce que** dans la position de travail (E), la surface de contact avec le sol (F) de la roue tâteuse (R) se trouve entre l'axe de toupie (A) et l'axe de pivotement (12), et **en ce que** lors du pivotement de la roue tâteuse (R) de la position de direction de position de travail (EP) dans la position de direction de position de transport (TP), avant d'atteindre la position de transport (T), l'axe de pivotement (12) est décalé autour de la surface de contact avec le sol (F) en direction de l'axe central longitudinal de la machine agricole (M).

5. Machine agricole selon au moins l'une des revendications précédentes, **caractérisée en ce qu'**au niveau de l'axe de toupie (A) sous la toupie à dents (K), une console (11) pour l'axe de pivotement (12), définissant l'espacement de décalage (Y) et approximativement verticale à l'axe de toupie (A), est montée, **en ce que** sur la console (11), un cylindre hydraulique de pivotement de roue tâteuse (16) est installé et articulé sur une bielle (19) fixée à l'axe de pivotement (12), et **en ce que** la roue tâteuse (R) est retenue sur un support axial (13) définissant au moins approximativement l'espacement (X) entre l'axe de pivotement (12) et la surface de contact avec le sol (F).

6. Machine agricole selon au moins l'une des revendications précédentes, **caractérisée en ce que** les parties latérales (S) peuvent être amenées à pivoter entre les positions de travail et de transport (ET) au moyen de cylindres hydrauliques (8) articulés sur la partie centrale (2), en particulier de cylindres hydrauliques à double effet.

7. Machine agricole selon la revendication 6, **caractérisée en ce que** la commande asservie (H) présente deux lignes de travail (26, 27) auxquelles sont raccordés en parallèle les cylindres hydrauliques de pivotement de partie latérale (8) et les cylindres hydrauliques de pivotement de roue tâteuse (16), **en ce que** dans ladite une ligne de travail (27) un clapet antiretour (33) est disposé en amont des cylindres hydrauliques de pivotement de roue tâteuse (16) et peut être débloqué par un élément de déblocage (35) qui peut être activé en fonction de l'état d'avancement de la transition de la machine agricole (M) de la position de travail (E) à la position de transport (T) juste avant d'atteindre la position de transport (T).

8. Machine agricole selon la revendication 7, **caractérisée en ce que** dans ladite autre ligne de travail (26) un diviseur de débit hydraulique (29) est installé.

9. Machine agricole selon au moins l'une des revendications précédentes, **caractérisée en ce que** l'angle de pivotement respectif de la roue tâteuse (R) autour de l'axe de pivotement (12) dans la position de direction de position de travail (EP) est variable par des butées réglables (42, 43), de préférence dans la console (11), de sorte que dans la position de travail (E) différents sens de marche de la machine agricole (M) peuvent être sélectionnés.

10. Machine agricole selon la revendication 9, **caractérisée en ce que** dans le sens de la marche choisi au moyen des butées réglables (42, 43), la partie latérale respective (S) ou la poutre de machine est disposée soit perpendiculairement au sens de la marche (5) soit sous un angle à droite ou à gauche de façon oblique au sens de la marche (5).

11. Machine agricole selon au moins l'une des revendications précédentes 6 à 10, **caractérisée en ce que** les cylindres hydrauliques de pivotement de roue tâteuse (16) sont conçus dans au moins une direction pour une pression de réponse inférieure aux vérins hydrauliques de pivotement de partie latérale (8).

12. Machine agricole selon au moins l'une des revendications précédentes, **caractérisée en ce qu'**un verrouillage mécanique (36), de préférence à enclenchement automatique, est prévu pour les parties latérales (S) rabattues dans la position de transport (T), et **en ce que** de préférence, l'enclenchement du verrouillage (36) peut être assisté par des composantes de pompe de force (P) générées dans la position de direction de position de transport (TP) lors du pivotement des roues tâteuses (R).
